# EUROPÄISCHE PATENTSCHRIFT

(11) **EP 2 467 621 B1**
(45) Veröffentlichungstag und Bekanntmachung des Hinweises auf die Patenterteilung: **25.02.2015**
(21) Anmeldenummer: 10751867.2
(22) Anmeldetag: 19.08.2010
(51) Int. Cl.: F16H 3/66

(54) **MEHRSTUFENGETRIEBE**
MULTI-RATIO TRANSMISSION
TRANSMISSION À PLUSIEURS ÉTAGES

(30) Priorität: 20.08.2009 DE 102009028671
(43) Veröffentlichungstag der Anmeldung: 27.06.2012
(73) Patentinhaber: ZF Friedrichshafen AG, 88038 Friedrichshafen (DE)
(72) Erfinder: GUMPOLTSBERGER, Gerhard, 88045 Friedrichshafen (DE); SIBLA, Christian, 88045 Friedrichshafen (DE); BECK, Stefan, 88097 Eriskirch (DE); HAUPT, Josef, 88069 Tettnang (DE); BAUKNECHT, Gert, 88048 Friedrichshafen (DE); ZIEMER, Peter, 88069 Tettnang (DE)
(86) Internationale Anmeldenummer: PCT/EP2010/062122
(87) Internationale Veröffentlichungsnummer: WO 2011/020890

(56) Entgegenhaltungen:
- DE-A1-102006 006 637
- JP-A- 2005 036 955
- US-A- 4 683 776

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Automatgetriebe ist beispielsweise aus der DE 199 49 507 A1 der Anmelderin bekannt; hierbei sind an der Antriebswelle zwei nicht schaltbare Vorschaltradsätze vorgesehen, die ausgangsseitig zwei Drehzahlen erzeugen, die neben der Drehzahl der Antriebswelle, wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Unter Verwendung von fünf Schaltelementen werden hierbei sieben Vorwärtsgänge erzielt, unter Verwendung von sechs Schaltelementen neun oder zehn Vorwärtsgänge.

Des weiteren ist aus der DE 102 13 820 A1 ein Mehrgangautomatikgetriebe mit acht Vorwärtsgängen und einen Rückwärtsgang bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz vom Typ Ravigneaux mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element S3 gekoppelt ist.

Ein 9-Gang-Mehrstufengetriebe ist ferner aus der DE 29 36 969 A1 bekannt; es umfasst acht Schaltelemente und vier Radsätze, wobei ein Radsatz als Vorschaltgetriebe dient und das Hauptgetriebe einen Simpson-Satz und einen weiteren als Umkehrgetriebe dienenden Radsatz aufweist.

Weitere Mehrstufengetriebe sind beispielsweise aus der DE 102005010210 A1 und der DE 102006006637 A1 der Anmelderin bekannt.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Aus der noch nicht veröffentlichten DE 102008000428.3 der Anmelderin ist ein Mehrstufengetriebe in Planetenbauweise bekannt, welches einen Antrieb und einen Abtrieb aufweist, welche in einem Gehäuse angeordnet sind. Bei dem bekannten Getriebe sind zumindest vier Planetensätze, im Folgenden als erster, zweiter, dritter und vierter Planetensatz bezeichnet, mindestens acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Hierbei bilden der erste und der zweite Planetensatz, die vorzugsweise als Minus-Planetensätze ausgebildet sind, einen schaltbaren Vorschaltradsatz, wobei der dritte und der vierte Planetensatz einen Hauptradsatz bilden.

Bei dem bekannten Mehrstufengetriebe ist vorgesehen, dass die Stege des ersten und des zweiten Planetensatzes über die vierte Welle miteinander gekoppelt sind, welche mit einem Element des Hauptradsatzes verbunden ist, dass das Hohlrad des ersten Planetensatzes mit dem Sonnenrad des zweiten Planetensatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetensatzes mittels der fünften Welle über eine zweite Bremse an ein Gehäuse des Getriebes ankoppelbar ist. Zudem ist die siebte Welle mit zumindest einem Element des Hauptradsatzes ständig verbunden und über eine dritte Bremse an ein Gehäuse des Getriebes ankoppelbar, wobei die sechste Welle mit zumindest einem weiteren Element des Hauptradsatzes ständig verbunden und über eine dritte Kupplung mit der Antriebswelle lösbar verbindbar ist; die Abtriebswelle ist mit zumindest einem weiteren Element des Hauptradsatzes ständig verbunden.

Vorzugsweise ist bei dem bekannten Getriebe die vierte Welle ständig mit dem Hohlrad des dritten Planetensatzes verbunden, wobei die sechste Welle ständig mit dem Hohlrad des vierten Planetensatzes und dem Steg des dritten Planetensatzes verbunden und über die dritte Kupplung mit der Antriebswelle lösbar verbindbar ist. Ferner ist die siebte Welle ständig mit den Sonnenrädern des dritten und vierten Planetensatzes verbunden und über die dritte Bremse an ein Gehäuse des Getriebes ankoppelbar. Der Abtrieb erfolgt hierbei über die ständig mit dem Steg des vierten Planetensatzes verbundene Abtriebswelle. Des weiteren können der dritte und der vierte Planetensatz zu einem Ravigneaux-Satz mit einem gemeinsamen Steg und einem gemeinsamen Hohlrad zusammengesetzt bzw. reduziert sein.

Der vorliegenden Erfindung liegt die Aufgabe zugrunde, ein Mehrstufengetriebe der eingangs genannten Art vorzuschlagen, welches neun Vorwärtsgänge und mindestens einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Insbesondere soll das erfindungsgemäße Getriebe für eine Front-Quer-Bauweise geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier Planetensätze, im Folgenden als erster, zweiter, dritter und vierter Planetensatz bezeichnet, acht drehbare Wellen - im Folgenden als Antriebswelle, Abtriebswelle, dritte, vierte, fünfte, sechste, siebte und achte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirken, so dass vorzugsweise neun Vorwärtsgänge und ein Rückwärtsgang realisierbar sind.

Die Planetensätze sind axial betrachtet in der Reihenfolge erster Planetensatz, zweiter Planetensatz, dritter Planetensatz, vierter Planetensatz angeordnet und sind vorzugsweise als Minus-Planetensätze ausgebildet.

Ein einfacher Minus-Planetensatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetensatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad.

Gemäß einer bevorzugten Ausführungsform der Erfindung ist das Sonnenrad des ersten Planetensatzes mit der mit dem Steg des vierten Planetensatzes wirkverbundenen Antriebswelle verbunden, wobei der Steg des ersten Planetensatzes mit der dritten Welle verbunden ist, welche über eine erste Bremse an ein Gehäuse des Getriebes ankoppelbar, über eine erste Kupplung mit der Antriebswelle und über eine zweite Kupplung mit der sechsten Welle lösbar verbindbar ist, wobei die sechste Welle mit dem Hohlrad des zweiten Planetensatzes, dem Sonnenrad des dritten Planetensatzes und dem Sonnenrad des vierten Planetensatzes verbunden ist.

Des weiteren ist das Hohlrad des ersten Planetensatzes mit der siebten Welle verbunden, die mit dem Steg des zweiten Planetensatzes verbunden ist, wobei das Hohlrad des dritten Planetensatzes über eine dritte Bremse an ein Gehäuse des Getriebes ankoppelbar ist, wobei das Sonnenrad des zweiten Planetensatzes mit der vierten Welle verbunden ist, die über eine zweite Bremse an ein Gehäuse des Getriebes ankoppelbar ist und wobei die mit dem Hohlrad des vierten Planetensatzes wirkverbundene Abtriebswelle mit dem Steg des dritten Planetensatzes verbunden ist.

Vorzugsweise ist die Antriebswelle mit dem Steg des vierten Planetensatzes über eine mit dem Steg des vierten Planetensatzes verbundene achte Welle und eine die achte Welle mit der Antriebswelle lösbar verbindende dritte Kupplung lösbar verbindbar, wobei die Abtriebswelle mit dem Hohlrad des vierten Planetensatzes direkt verbunden ist.

Durch die erfindungsgemäße Ausgestaltung des Mehrstufengetriebes ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Momente in den Schaltelementen und in den Planetensätzen des Mehrstufengetriebes vor, wodurch der Verschleiß bei dem Mehrstufengetriebe in vorteilhafter Weise reduziert wird. Zudem wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer ersten bevorzugten Ausführungsform eines erfindungsgemäßen Mehrstufengetriebes;
- Figur 2:: Ein beispielhaftes Schaltschema für ein Mehrstufengetriebe gemäß Figur 1.

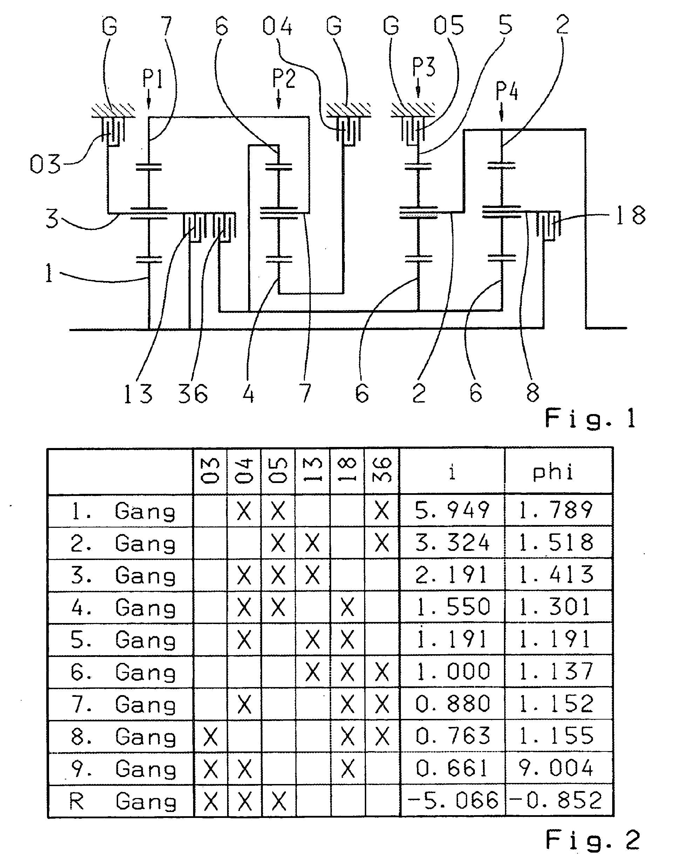

In Figur 1 ist ein erfindungsgemäßes Mehrstufengetriebe mit einer Antriebswelle 1, einer Abtriebswelle 2 und vier Planetensätzen P1, P2, P3 und P4 dargestellt, welche in einem Gehäuse G angeordnet sind. Die Planetensätze P1, P2, P3 und P4 sind bei dem in Figur 1 gezeigten Beispiel als Minus-Planetensätze ausgebildet. Gemäß der Erfindung kann zumindest ein Planetensatz als Plus-Planetensatz ausgeführt sein, wenn gleichzeitig die Steg- und Hohlradanbindung getauscht und der Betrag der Standübersetzung im Vergleich zu der Ausführung als Minus-Planetensatz um 1 erhöht wird.

Bei dem gezeigten Ausführungsbeispiel sind die Planetensätze axial betrachtet in der Reihenfolge P1, P2, P3, P4 angeordnet.

Wie aus Figur 1 ersichtlich, sind sechs Schaltelemente, nämlich drei Bremsen 03, 04, 05 und drei Kupplungen 13, 36 und 18 vorgesehen. Die räumliche Anordnung der Schaltelemente kann beliebig sein und wird nur durch die Abmessungen und die äußere Formgebung begrenzt. Die Kupplungen und die Bremsen des Getriebes sind vorzugsweise als Reibschaltelemente bzw. Lamellenschaltelemente ausgeführt.

Mit diesen Schaltelementen ist ein selektives Schalten von neun Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 7 und 8, wobei die Antriebswelle die erste Welle und die Abtriebswelle die zweite Welle des Getriebes bildet.

Erfindungsgemäß ist bei dem Mehrstufengetriebe gemäß Figur 1 vorgesehen, dass das Sonnenrad des ersten Planetensatzes P1 mit der Antriebswelle 1 verbunden ist, wobei der Steg des ersten Planetensatzes P1 mit der dritten Welle 3 verbunden ist, welche über eine erste Bremse 03 an ein Gehäuse G des Getriebes ankoppelbar, über eine erste Kupplung 13 mit der Antriebswelle 1 und über eine zweite Kupplung 36 mit der sechsten Welle 6 lösbar verbindbar ist.

Wie aus Figur 1 ersichtlich, ist die sechste Welle 6 mit dem Hohlrad des zweiten Planetensatzes P2 , dem Sonnenrad des dritten Planetensatzes P3 und dem Sonnenrad des vierten Planetensatzes P4 verbunden, wobei die Antriebswelle 1 über die mit dem Steg des vierten Planetensatzes verbundene achte Welle 8 und eine die achte Welle 8 mit der Antriebswelle 1 lösbar verbindende dritte Kupplung 18 mit dem Steg des vierten Planetensatzes P4 lösbar verbindbar ist.

Erfindungsgemäß ist das Hohlrad des ersten Planetensatzes P1 mit der siebten Welle 7 verbunden, die mit dem Steg des zweiten Planetensatzes P2 verbunden ist, wobei das Hohlrad des dritten Planetensatzes P3 mit der fünften Welle 5 verbunden ist, die über eine dritte Bremse 05 an ein Gehäuse G des Getriebes ankoppelbar ist und wobei das Sonnenrad des zweiten Planetensatzes P2 mit der vierten Welle 4 verbunden ist, die über eine zweite Bremse 04 an ein Gehäuse G des Getriebes ankoppelbar ist; die Abtriebswelle 2 ist bei dem gezeigten Ausführungsbeispiel mit dem Steg des dritten Planetensatzes P3 und dem Hohlrad des vierten Planetensatzes P4 direkt verbunden.

Erfindungsgemäß können die erste Kupplung 13 und die zweite Kupplung 36 axial betrachtet zwischen dem ersten und dem zweiten Planetensatz P1, P2 angeordnet sein, wobei die dritte Kupplung 18 axial in Kraftflussrichtung im Zugbetrieb betrachtet nach dem vierten Planetensatz P4 angeordnet sein kann.

Ferner sind die zweite und die dritte Bremse 04, 05 axial betrachtet vorzugsweise nebeneinander angeordnet.

In Figur 2 ist ein beispielhaftes Schaltschema eines Mehrstufengetriebes gemäß Figur 1 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge phi zum nächst höheren Gang beispielhaft entnommen werden, wobei der Wert 9,004 die Spreizung des Getriebes darstellt.

Typische Werte für die Standübersetzungen der als Minus-Planetensätze ausgeführten Planetensätze P1, P2, P3 und P4 sind jeweils -1,953, -2,191, - 2,235 und -2,404. Aus Figur 2 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Ferner wird ersichtlich, dass eine große Spreizung bei kleinen Gangsprüngen erzielt wird.

Der erste Vorwärts-Gang ergibt sich durch Schließen der zweiten und dritten Bremse 04, 05 und der zweiten Kupplung 36, der zweite Vorwärts-Gang durch Schließen der dritten Bremse 05 und der ersten und zweiten Kupplung 13, 36, der dritte Vorwärts-Gang durch Schließen der zweiten und dritten Bremse 04, 05 und der ersten Kupplung 13, der vierte Vorwärts-Gang durch Schließen der zweiten und dritten Bremse 04, 05 und der dritten Kupplung 18, der fünfte Vorwärts-Gang durch Schließen der zweiten Bremse 04 und der ersten und dritten Kupplung 13, 18, der vorzugsweise als Direktgang ausgeführte sechste Vorwärts-Gang durch Schließen sämtlicher Kupplungen 13, 36, 18, der siebte Vorwärts-Gang durch Schließen der zweiten Bremse 04 und der zweiten und dritten Kupplung 36, 18, der achte VorwärtsGang durch Schließen der ersten Bremse 03 und der zweiten und dritten Kupplung 36, 18 und der neunte Vorwärts-Gang ergibt sich durch Schließen der ersten und der zweiten Bremse 03, 04 und der dritten Kupplung 18, wobei sich der Rückwärtsgang durch Schließen sämtlicher Bremsen 03, 04 und 05 ergibt.

Dadurch, dass im ersten Vorwärtsgang und im Rückwärtsgang die Bremsen 04 und 05 geschlossen sind, können diese Schaltelemente als Anfahrelemente eingesetzt werden.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Erfindungsgemäß ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 8': weitere Welle
- 03: erste Bremse
- 04: zweite Bremse
- 05: dritte Bremse
- 13: erste Kupplung
- 18: dritte Kupplung
- 36: zweite Kupplung
- P1: erster Planetensatz
- P2: zweiter Planetensatz
- P3: dritter Planetensatz
- P4: vierter Planetensatz
- i: Übersetzung
- phi: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1), eine Abtriebswelle (2) und vier Planetensätze (P1, P2, P3, P4), welche in einem Gehäuse (G) angeordnet sind, insgesamt acht drehbare Wellen (1, 2, 3, 4, 5, 6, 7, 8) sowie mindestens sechs Schaltelemente (03, 04, 05, 13, 18, 36), umfassend Bremsen (03, 04, 05) und Kupplungen (13, 18, 36), deren selektives Eingreifen verschiedene Übersetzungsverhältnisse zwischen der Antriebswelle (1) und der Abtriebswelle (2) bewirken, so dass neun Vorwärtsgänge und ein Rückwärtsgang realisierbar sind, wobei das Sonnenred des ersten Planetensatzes (P1) mit der mit dem Steg des vierten Planetensatzes (P4) wirkverbundenen Antriebswelle (1) verbunden ist, wobei der Steg des ersten Planetensatzes (P1) mit der dritten Welle (3) verbunden ist, welche über eine erste Bremse (03) an ein Gehäuse (G) des Getriebes ankoppelbar, über eine erste Kupplung (13) mit der Antriebswelle (1) und über eine zweite Kupplung (36) mit der sechsten Welle (6) lösbar verbindbar ist, wobei die sechste Welle (6) mit dem Hohlrad des zweiten Planetensatzes (P2), dem Sonnenrad des dritten Planetensatzes (P3) und dem Sonnenrad des vierten Planetensatzes (P4) verbunden ist, wobei die siebte Welle (7) mit dem Hohlrad des ersten Planetensatzes (P1) und dem Steg des zweiten Planetensatzes (P2) verbunden ist, wobei das Sonnenrad des zweiten Planetensatzes (P2) mit der vierten Welle (4) verbunden ist, die über eine zweite Bremse (04) an ein Gehäuse (G) des Getriebes ankoppelbar ist, wobei das Hohlrad des dritten Planetensatzes (P3) mit der fünften Welle (5) verbunden ist, die über eine dritte Bremse (05) an ein Gehäuse (G) des Getriebes ankoppelbar ist und wobei die mit dem Hohlrad des vierten Planetensatzes (P4) wirkverbundene Abtriebswelle (2) mit dem Steg des dritten Planetensatzes (P3) verbunden ist.

2. Mehrstufengetriebe nach Anspruch 1, **dadurch gekennzeichnet, dass** die Antriebswelle (1) mit dem Steg des vierten Planetensatzes (P4) über eine mit dem Steg des vierten Planetensatzes (P4) verbundene achte Welle (8) und eine die achte Welle (8) mit der Antriebswelle (1) lösbar verbindende dritte Kupplung (18) lösbar verbindbar ist, wobei die Abtriebswelle (2) mit dem Hohlrad des vierten Planetensatzes (P4) direkt verbunden ist.

3. Mehrstufengetriebe nach Anspruch 1 oder 2, **dadurch gekennzeichnet, dass** die Planetensätze (P1, P2, P3, P4) als Minus-Planetensätze ausgebildet sind.

4. Mehrstufengetriebe nach Anspruch 2 oder 3, **dadurch gekennzeichnet, dass** sich der erste Vorwärts-Gang durch Schließen der zweiten und dritten Bremse (04, 05) und der zweiten Kupplung (36), der zweite Vorwärts-Gang durch Schließen der dritten Bremse (05) und der ersten und zweiten Kupplung (13, 36), der dritte Vorwärts-Gang durch Schließen der zweiten und dritten Bremse (04, 05) und der ersten Kupplung (13), der vierte Vorwärts-Gang durch Schließen der zweiten und dritten Bremse (04, 05) und der dritten Kupplung (18), der fünfte Vorwärts-Gang durch Schließen der zweiten Bremse (04) und der ersten und dritten Kupplung (13, 18), der sechste Vorwärts-Gang durch Schließen sämtlicher Kupplungen (13, 36, 18), der siebte Vorwärts-Gang durch Schließen der zweiten Bremse (04) und der zweiten und dritten Kupplung (36, 18), der achte Vorwärts-Gang durch Schließen der ersten Bremse (03) und der zweiten und dritten Kupplung (36, 18) und dass sich der neunte Vorwärts-Gang durch Schließen der ersten und der zweiten Bremse (03, 04) und der dritten Kupplung (18) ergibt, wobei sich der Rückwärtsgang durch Schließen sämtlicher Bremsen (03, 04 und 05) ergibt.

## Claims

1. Multi-stage gearbox of planetary construction, in particular automatic gearbox for a motor vehicle, comprising a drive input shaft (1), a drive output shaft (2) and four planetary gear sets (P1, P2, P3, P4) which are arranged in a housing (G), a total of eight rotatable shafts (1, 2, 3, 4, 5, 6, 7, 8) and at least six shift elements (03, 04, 05, 13, 18, 36), comprising brakes (03, 04, 05) and clutches (13, 18, 36), the selective engagement of which generates different transmission ratios between the drive input shaft (1) and the drive output shaft (2), such that nine forward gears and one reverse gear can be realized, wherein the sun gear of the first planetary gear set (P1) is connected to the drive input shaft (1), which is operatively connected to the web of the fourth planetary gear set (P4), wherein the web of the first planetary gear set (P1) is connected to the third shaft (3), which can be coupled by means of a first brake (03) to a housing (G) of the gearbox and which is detachably connected by means of a first clutch (13) to the drive input shaft (1) and by means of a second clutch (36) to the sixth shaft (6), wherein the sixth shaft (6) is connected to the internal gear of the second planetary gear set (P2), to the sun gear of the third planetary gear set (P3) and to the sun gear of the fourth planetary gear set (P4), wherein the seventh shaft (7) is connected to the internal gear of the first planetary gear set (P1) and to the web of the second planetary gear set (P2), wherein the sun gear of the second planetary gear set (P2) is connected to the fourth shaft (4), which can be coupled by means of a second brake (04) to a housing (G) of the gearbox, wherein the internal gear of the third planetary gear set (P3) is connected to the fifth shaft (5), which can be coupled by means of a third brake (05) to a housing (G) of the gearbox, and wherein the drive output shaft (2), which is operatively connected to the internal gear of the fourth planetary gear set (P4)is connected to the web of the third planetary gear set (P3).

2. Multi-stage gearbox according to Claim 1, **characterized in that** the drive input shaft (1) is detachably connectable to the web of the fourth planetary gear set (P4) by means of an eighth shaft (8), which is connected to the web of the fourth planetary gear set (P4), and by means of a third clutch (18) that detachably connects the eighth shaft (8) to the drive input shaft (1), wherein the drive output shaft (2) is directly connected to the internal gear of the fourth planetary gear set (P4).

3. Multi-stage gearbox according to Claim 1 or 2, **characterized in that** the planetary gear sets (P1, P2, P3, P4) are configured as minus planetary gear sets.

4. Multi-stage gearbox according to Claim 2 or 3, **characterized in that** the first forward gear is generated by closing the second and third brakes (04, 05) and the second clutch (36), the second forward gear is generated by closing the third brake (05) and the first and second clutches (13, 36), the third forward gear is generated by closing the second and third brakes (04, 05) and the first clutch (13), the fourth forward gear is generated by closing the second and third brakes (04, 05) and the third clutch (18), the fifth forward gear is generated by closing the second brake (04) and the first and third clutches (13, 18), the sixth forward gear is generated by closing all of the clutches (13, 36, 18), the seventh forward gear is generated by closing the second brake (04) and the second and third clutches (36, 18), the eighth forward gear is generated by closing the first brake (03) and the second and third clutches (36, 18), and **in that** the ninth forward gear is generated by closing the first and second brakes (03, 04) and the third clutch (18), wherein the reverse gear is generated by closing all of the brakes (03, 04 and 05).

## Revendications

1. Transmission à plusieurs étages à structure planétaire, en particulier transmission automatique pour un véhicule automobile, comprenant un arbre d'entraînement (1), un arbre de prise de force (2) et quatre trains planétaires (P1, P2, P3, P4), qui sont disposés dans un boîtier (G), au total huit arbres rotatifs (1, 2, 3, 4, 5, 6, 7, 8) ainsi qu'au moins six éléments de commutation (03, 04, 05, 13, 18, 36), comprenant des freins (03, 04, 05) et des embrayages (13, 18, 36), dont l'engagement sélectif provoque différents rapports de démultiplication entre l'arbre d'entraînement (1) et l'arbre de prise de force (2), de sorte que neuf rapports de marche avant et un rapport de marche arrière puissent être réalisés, la roue solaire du premier train planétaire (P1) étant connectée à l'arbre d'entraînement (1) qui est connecté fonctionnellement au porte-satellites du quatrième train planétaire (P4), le porte-satellites du premier train planétaire (P1) étant connecté au troisième arbre (3) qui peut être accouplé par le biais d'un premier frein (03) à un boîtier (G) de la transmission, qui peut être connecté de manière desserrable par le biais d'un premier embrayage (13) à l'arbre d'entraînement (1) et par le biais d'un deuxième embrayage (36) au sixième arbre (6), le sixième arbre (6) étant connecté à la couronne dentée du deuxième train planétaire (P2), à la roue solaire du troisième train planétaire (P3) et à la roue solaire du quatrième train planétaire (P4), le septième arbre (7) étant connecté à la couronne dentée du premier train planétaire (P1) et au porte-satellites du deuxième train planétaire (P2), la roue solaire du deuxième train planétaire (P2) étant connectée au quatrième arbre (4) qui peut être accouplé par le biais d'un deuxième frein (04) à un boîtier (G) de la transmission, la couronne dentée du troisième train planétaire (P3) étant connectée au cinquième arbre (5), qui peut être accouplé par le biais d'un troisième frein (05) à un boîtier (G) de la transmission, et l'arbre de prise de force (2) qui est connecté fonctionnellement à la couronne dentée du quatrième train planétaire (P4) étant connecté au porte-satellites du troisième train planétaire (P3).

2. Transmission à plusieurs étages selon la revendication 1, **caractérisée en ce que** l'arbre d'entraînement (1) peut être connecté de manière desserrable au porte-satellites du quatrième train planétaire (P4) par le biais d'un huitième arbre (8) connecté au porte-satellites du quatrième train planétaire (P4) et d'un troisième embrayage (18) reliant de manière desserrable le huitième arbre (8) et l'arbre d'entraînement (1), l'arbre de prise de force (2) étant connecté directement à la couronne dentée du quatrième train planétaire (P4).

3. Transmission à plusieurs étages selon la revendication 1 ou 2, **caractérisée en ce que** les trains planétaires (P1, P2, P3, P4) sont réalisés sous forme de trains planétaires négatifs.

4. Transmission à plusieurs étages selon la revendication 2 ou 3, **caractérisée en ce que** le premier rapport de marche avant s'obtient par fermeture du deuxième et du troisième frein (04, 05) et du deuxième embrayage (36), le deuxième rapport de marche avant s'obtient par fermeture du troisième frein (05) et du premier et du deuxième embrayage (13, 36), le troisième rapport de marche avant s'obtient par fermeture du deuxième et du troisième frein (04, 05) et du premier embrayage (13), le quatrième rapport de marche avant s'obtient par fermeture du deuxième et du troisième frein (04, 05) et du troisième embrayage (18), le cinquième rapport de marche avant s'obtient par fermeture du deuxième frein (04) et du premier et du troisième embrayage (13, 18), le sixième rapport de marche avant s'obtient par fermeture de tous les embrayages (13, 36, 18), le septième rapport de marche avant s'obtient par fermeture du deuxième frein (04) et du deuxième et du troisième embrayage (36, 18), le huitième rapport de marche avant s'obtient par fermeture du premier frein (03) et du deuxième et du troisième embrayage (36, 18) et le neuvième rapport de marche avant s'obtient par fermeture du premier et du deuxième frein (03, 04) et du troisième embrayage (18), le rapport de marche arrière s'obtenant par fermeture de tous les freins (03, 04 et 05).
